# EUROPEAN PATENT SPECIFICATION

(11) **EP 3 844 220 B1**
(45) Date of publication and mention of the grant of the patent: **23.09.2026**
(21) Application number: 19780042.8
(22) Date of filing: 30.08.2019
(51) Int. Cl.: C08L 67/02

(54) **COPOLYETHERESTER FORMULATION WITH IMPROVED HEAT-STABILITY**
COPOLYETHERESTERFORMULIERUNG MIT VERBESSERTER WÄRMESTABILITÄT
FORMULATION DE COPOLYÉTHERESTERS PRÉSENTANT UNE STABILITÉ THERMIQUE AMÉLIORÉE

(30) Priority: 30.08.2018 US 201862724908 P
(43) Date of publication of application: 07.07.2021
(73) Proprietor: Celanese Polymers Holdings, Inc., Wilmington, Delaware 19805 (US)
(72) Inventor: SZEKELY, Peter Laszlo, 74370 Pringy (FR); SOMMERS, Mark, Pennsville, New Jersey 08070 (US)
(74) Representative: Marks & Clerk LLP
(86) International application number: PCT/US2019/049060
(87) International publication number: WO 2020/047406

(56) References cited:
- JP-A- H11 323 110

## Description

### Field of the Invention

The present invention relates to the field of polymer resin formulations, specifically copolyetherester resin formulations having good heat-stability.

### Background of the Invention

Copolyetheresters are increasingly used to replace metal and rubber, particularly in automotive applications.

In many such applications, for example, in automotive fluid ducts, the copolyetherester part is exposed to elevated temperatures in use. This is generally detrimental to the mechanical properties of the copolyetherester, resulting, for example, in a loss of tensile strength with time and decrease of strain at break, which can cause failure of the part.

It is known to use antioxidants in copolyetheresters to confer improved heat-stability.

JP H11 323110 A relates to a polyester elastomer resin composition prepared by mixing, against 100 pts.wt. polyether ester block copolymer (A) containing as principal structural components a high-melting crystalline polymer segment (a) mainly comprising crystalline aromatic polyester units and a low-melting polymer segment (b) mainly comprising aliphatic polyether units, from 0.01 to 10 pts.wt epoxy compound (B) with a functionality of two or larger, from 0.01 to 5 pts.wt. aromatic amine antioxidant (C), from 0.01 to 5 pts.wt. hindered phenol antioxidants (D), from 0.01 to 5 pts.wt. sulfur antioxidant and/or from 0.01 to 5 pts.wt. phosphorus antioxidants (F).

Nevertheless, as engine operating temperatures increase, there is a growing need for copolyetherester compositions having improved retention of mechanical properties on prolonged heat exposure.

### Summary of the Invention

In a first aspect, the invention provides a copolyetherester resin composition comprising:
(A) at least one copolyetherester;
(B) at least one phenolic antioxidant;
(C) at least one thioester antioxidant;
(D) at least one phosphite and/or phosphonite antioxidant;
(E) at least one epoxy compound,

wherein the at least one thioester antioxidant is selected from dilauryl thiodipropionate, thiodiethylene bis[3-[3,5-di-tert-butyl-4-hydroxyphenyl]-propionate], 3,3'-thiodipropionic acid dioctadecylester, 4,4'-thiobis(2-tert-butyl-5-methylphenol) bis(3-(dodecylthio)propionate), neopentanetetrayl 3-(dodecylthio)propionate, di(tridecyl) thiodipropionate, and mixtures of two or more of these, and
wherein the phosphite antioxidant is selected from diphosphites, sterically hindered aryl phosphites, hindered amine stabilizer phosphites, pentaerythritol diphosphites, and mixtures of two or more of these.

In a second aspect, the invention provides a part made from the copolyetherester resin composition hereinbefore described.

### Detailed Description of the Invention

The inventors have surprisingly found that copolyetherester resin compositions as hereinbefore described have improved retention of mechanical properties, in particular strain at break, upon heat-ageing. This characteristic makes such resin formulations particularly suited to use in high-temperature environments. For example, the formulations may be useful as fluid ducts, for example, to convey air, gas or liquids, in particular in automotive applications, for instance in an airflow system of a vehicle engine.

### At least one copolyetherester

The one or more copolyether-esters suitable for use in the compositions of the invention are preferably present in the compositions of the invention in an amount from at or about 50 to at or about 98 weight percent, the weight percentage being based on the total weight of the polymer composition.

Copolyetherester used for the compositions of the invention have a multiplicity of recurring long-chain ester units and short-chain ester units joined head-to-tail through ester linkages, said long-chain ester units being represented by formula (A): 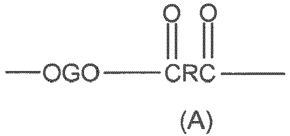
and said short-chain ester units being represented by formula (B): 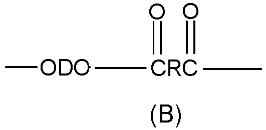 wherein
G is a divalent radical remaining after the removal of terminal hydroxyl groups from poly(alkylene oxide)glycols having a number average molecular weight of between about 400 and about 6000 Da, or preferably between about 400 and about 3000 Da;
R is a divalent radical remaining after removal of carboxyl groups from a dicarboxylic acid having a molecular weight of less than about 300 Da;
D is a divalent radical remaining after removal of hydroxyl groups from a diol having a molecular weight less than about 250 Da.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxy groups and having a number average molecular weight of from about 400 to about 6000 Da, and preferably from about 600 to about 3000 Da. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used.

As used herein, the term "short-chain ester units" as applied to units in a polymer chain of the copolyetheresters refers to low molecular weight compounds or polymer chain units having molecular weights less than about 550 Da. They are made by reacting a low molecular weight diol or a mixture of diols (molecular weight below about 250 Da) with a dicarboxylic acid to form ester units represented by Formula (B) above.

Included among the low molecular weight diols which react to form short-chain ester units suitable for use for preparing copolyetheresters are acyclic, alicyclic and aromatic dihydroxy compounds. Preferred compounds are diols with about 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, and the like. Especially preferred diols are aliphatic diols containing 2-8 carbon atoms, and a more preferred diol is 1,4-butanediol. Included among the bisphenols which can be used are bis(*p*-hydroxy)diphenyl, bis(*p-*hydroxyphenyl)methane, and bis(*p*-hydroxyphenyl)propane. Equivalent ester-forming derivatives of diols are also useful (e.g., ethylene oxide or ethylene carbonate can be used in place of ethylene glycol or resorcinol diacetate can be used in place of resorcinol).

As used herein, the term "diols" includes equivalent ester-forming derivatives such as those mentioned. However, any molecular weight requirements refer to the corresponding diols, not their derivatives.

Dicarboxylic acids that can react with the foregoing long-chain glycols and low molecular weight diols to produce the copolyetheresters are aliphatic, cycloaliphatic or aromatic dicarboxylic acids of a low molecular weight, i.e., having a molecular weight of less than about 300 Da. The term "dicarboxylic acids" as used herein includes functional equivalents of dicarboxylic acids that have two carboxyl functional groups that perform substantially like dicarboxylic acids in reaction with glycols and diols in forming copolyetherester polymers. These equivalents include esters and ester-forming derivatives such as acid halides and anhydrides. The molecular weight requirement pertains to the acid and not to its equivalent ester or ester-forming derivative.

Thus, an ester of a dicarboxylic acid having a molecular weight greater than 300 daltons or a functional equivalent of a dicarboxylic acid having a molecular weight greater than 300 daltons are included provided the corresponding acid has a molecular weight below about 300 daltons. The dicarboxylic acids can contain any substituent groups or combinations that do not substantially interfere with copolyetherester polymer formation.

As used herein, the term "aliphatic dicarboxylic acids" refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid, can be used.

As used herein, the term "aromatic dicarboxylic acids" refers to dicarboxylic acids having two carboxyl groups each attached to a carbon atom in a carbocyclic aromatic ring structure. It is not necessary that both functional carboxyl groups be attached to the same aromatic ring and where more than one ring is present, they can be joined by aliphatic or aromatic divalent radicals or divalent radicals such as -O- or -SO₂-. Representative useful aliphatic and cycloaliphatic acids that can be used include sebacic acid; 1,3-cyclohexane dicarboxylic acid; 1,4-cyclohexane dicarboxylic acid; adipic acid; glutaric acid; 4-cyclohexane-1,2-dicarboxylic acid; 2-ethylsuberic acid; cyclopentanedicarboxylic acid, decahydro-1,5-naphthylene dicarboxylic acid; 4,4'-bicyclohexyl dicarboxylic acid; decahydro-2,6-naphthylene dicarboxylic acid; 4,4'-methylenebis(cyclohexyl) carboxylic acid; and 3,4-furan dicarboxylic acid. Preferred acids are cyclohexane dicarboxylic acids and adipic acid.

Representative aromatic dicarboxylic acids include phthalic, terephthalic and isophthalic acids; dibenzoic acid; substituted dicarboxy compounds with two benzene nuclei such as bis(p-carboxyphenyl)methane; p-oxy-1,5-naphthalene dicarboxylic acid; 2,6-naphthalene dicarboxylic acid; 2,7-naphthalene dicarboxylic acid; 4,4'-sulfonyl dibenzoic acid and C₁-C₁₂ alkyl and ring substitution derivatives thereof, such as halo, alkoxy, and aryl derivatives. Hydroxy acids such as p-(beta-hydroxyethoxy)benzoic acid can also be used provided an aromatic dicarboxylic acid is also used.

Aromatic dicarboxylic acids are a preferred class for preparing the copolyetherester elastomers useful for this invention. Among the aromatic acids, those with 8-16 carbon atoms are preferred, particularly terephthalic acid alone or with a mixture of phthalic and/or isophthalic acids.

The copolyetherester elastomer preferably comprises from at or about 15 to at or about 99 weight percent short-chain ester units corresponding to Formula (B) above, based on the total weight of the copolyetherester, the remainder being long-chain ester units corresponding to Formula (A) above. The sum of the weight percentages of all the copolymerized units in the copolyetherester is 100 weight percent. More preferably, the copolyetherester elastomers comprise from at or about 20 to at or about 95 weight percent, and even more preferably from at or about 50 to at or about 90 weight percent short-chain ester units, where the remainder is long-chain ester units. More preferably, at least about 70 mole % of the groups represented by R in Formulae (A) and (B) above are 1,4-phenylene radicals and at least about 70 mole % of the groups represented by D in Formula (B) above are 1,4-butylene radicals and the sum of the percentages of R groups which are not 1,4-phenylene radicals and D groups that are not 1,4-butylene radicals does not exceed 30 mole %. If a second dicarboxylic acid is used to prepare the copolyetherester, isophthalic acid is preferred and if a second low molecular weight diol is used, ethylene glycol, 1,3-propanediol, cyclohexanedimethanol, or hexamethylene glycol are preferred.

A blend or mixture of two or more copolyetherester elastomers can be used. The copolyetherester elastomers used in the blend need not on an individual basis come within the values disclosed hereinbefore for the elastomers. However, the blend of two or more copolyetherester elastomers must conform to the values described herein for the copolyetheresters on a weighted average basis. For example, in a mixture that contains equal amounts of two copolyetherester elastomers, one copolyetherester elastomer can contain 60 weight percent short-chain ester units and the other resin can contain 30 weight percent short-chain ester units for a weighted average of 45 weight percent short-chain ester units.

Preferred copolyetheresters include, but are not limited to, copolyetherester elastomers prepared from monomers comprising (1) poly(tetramethylene oxide) glycol; (2) a dicarboxylic acid selected from isophthalic acid, terephthalic acid and mixtures of these; and (3) a diol selected from 1,4-butanediol, 1,3-propanediol and mixtures of these, or from monomers comprising (1) poly(trimethylene oxide) glycol; (2) a dicarboxylic acid selected from isophthalic acid, terephthalic acid and mixtures of these; and (3) a diol selected from 1,4-butanediol, 1,3-propanediol and mixtures of these, or from monomers comprising (1) ethylene oxide-capped poly(propylene oxide) glycol; (2) a dicarboxylic acid selected from isophthalic acid, terephthalic acid and mixtures of these; and (3) a diol selected from 1,4-butanediol, 1,3-propanediol and mixtures of these.

Preferably, the copolyetheresters are prepared from esters or mixtures of esters of terephthalic acid and/or isophthalic acid, 1,4-butanediol and poly(tetramethylene ether)glycol or poly(trimethylene ether) glycol or ethylene oxide-capped polypropylene oxide glycol, or are prepared from esters of terephthalic acid, e.g. dimethylterephthalate, 1,4-butanediol and poly(ethylene oxide)glycol. More preferably, the copolyetheresters are prepared from esters of terephthalic acid, e.g. dimethylterephthalate, 1,4-butanediol and poly(tetramethylene ether)glycol.

In a preferred embodiment, the compositions according to the present invention comprise copolyetherester elastomers prepared from monomers comprising (1) poly(tetramethylene oxide) glycol or poly(trimethylene oxide) glycol and mixtures of these; (2) a dicarboxylic acid selected from the group consisting of isophthalic acid, terephthalic acid and mixtures of these; and (3) a diol selected from the group consisting of 1,4-butanediol, 1,3-propanediol and mixtures of these.

More preferably, the compositions according to the present invention comprise copolyetherester elastomers prepared from monomers comprising (1) poly(tetramethylene oxide) glycol; (2) terephthalic acid; and (3) a diol selected from the group consisting of 1,4-butanediol, 1,3-propanediol and mixtures of these and wherein the level of poly(tetramethylene oxide) glycol is more than about 25 weight percent based on the total weight of the copolyetherester.

More particularly preferably, the compositions according to the present invention comprise copolyetherester elastomers prepared from monomers comprising (1) poly(tetramethylene oxide) glycol; (2) terephthalic acid; and (3) 1,4-butanediol, wherein the level of poly(tetramethylene oxide) glycol is preferably more than about 15 weight percent based on the total weight of the copolyetherester.

Particularly preferred is an elastomeric copolyether-ester having hard segments composed of polybutylene terephthalate and approximately 40 % by weight of soft segment composed of polyether terephthalate. The fraction of hard segments is approximately 60% by weight. The polyether blocks are derived from polytetramethylene glycol and have a molecular weight of approximately 1000g/mol. The copolyether-ester has a modulus in tension at 23°C, in accordance with ISO standard 527/2, of approximately 180MPa.

In a particularly preferred embodiment, the copolyetherester has a hardness of between 40 and 72, more preferably between 50 and 63, particularly preferably 55D, shore D hardness as measured according to ISO7619-1 with type D durometer after at least 1 hour of conditioning at 23°C prior to testing. The hardness value corresponds to the maximum force applied on a 6mm thick injection molded flat surface.

The copolyetherester may be blended with other polymers, for example, polyesters (such as PET, PBT), ionomers, styrenic copolymers (such as ABS, SEBS, SEPS), polyamides, polycarbonates, PVC, or PMMA.

### At least one phenolic antioxidant

The compositions of the invention comprise at least one phenolic antioxidant. Phenolic antioxidants are not particularly limited, provided they are hindered phenols capable of acting as radical scavengers. For example, phenols in which the hydroxyl function is flanked by tert-butyl groups are common and suitable.

The phenolic antioxidant may be selected from mono-phenols, di-phenols, tri-phenols, and molecules having more than three phenol groups.

Particularly preferred are di- and tri-phenols, in particular where the hydroxyl groups are flanked by two alkyl groups, particularly tertiary butyl groups.

Examples of suitable phenolic antioxidants include, without limitation, the following:
1,3,5-Tris(3,5-di-*tert*-butyl-4-hydroxybenzyl)-s-triazine-2,4,6(1H,3H,5H)-trione (AO-20), pentaerythritol tetrakis(3,5-di-*tert*-butyl-4-hydroxyhydrocinnamate) (AO-60), 1,3,5-Trimethyl-2,4,6-tris(3,5-di-*tert-*butyl-4-hydroxybenzyl)benzene (AO-330), octadecyl 3-(3,5-di-*tert-*butyl-4-hydroxyphenyl)propionate (EVERNOX-76), octyl-3,5-di-*tert-*butyl-4-hydroxy-hydrocinnamate (EVERNOX-1135), 1,2-Bis(3,5-di-*tert-*butyl-4-hydroxyhydrocinnamoyl)hydrazine (EVERNOX MD-1024), 3,3'-Bis(3,5-di-*tert*-butyl-4-hydroxyphenyl)-N,N'-hexamethylenedipropionamide (EVERNOX-1098), N,N'-propane-1,3-diylbis [3-(3,5-di-*tert*-butyl-4-hydroxyphenyl) propionamide], 1,1,3-Tris(2-methyl-4-hydroxy-5-*tert*-butylphenyl) butane (AO-30), 4,4'-butylidene-bis(6-*tert*-butyl-*m*-cresol) (AO-40), octadecyl 3-(3,5-di-*tert-*butyl-4-hydroxyphenyl) propanoate (AO-50).

Phenolic antioxidants may be used singly or in combinations of two, three or more in the copolyetherester resin compositions described herein.

Particularly preferred is a mixture of:
(a) N,N'-propane-1,3-diylbis [3-(3,5-di-*tert*-butyl-4-hydroxyphenyl) propionamide], and
(b) N,N'-Hexane-1,6 diylbis [3-(3,5-di-butyl-4-hydroxyphenyl) propionamide],
particularly at a total amount [(a) + (b)] of 0.10 to 1.0 wt%, more preferably 0.20 to 0.4wt%, even more preferably at or about 0.3 wt%, based on the total weight of the copolyetherester resin composition. Preferably the ratio of (a):(b) is 1:1 by weight.

The at least one phenolic antioxidant is preferably present in an amount of from 0.10 to 0.6 wt%, more preferably from 0.10 to 0.3 wt%, more particularly preferably 0.20 to 0.30 wt%, based on the total weight of the copolyetherester resin composition.

### At least one thioester antioxidant

The compositions of the invention comprise at least one thioester antioxidant. Particularly preferred are thioesters having a melting point of between 30 and 60°C.

The at least one thioester antioxidant is selected from: dilauryl thiodipropionate, thiodiethylene bis[3-[3,5-di-tert-butyl-4-hydroxyphenyl]-propionate], 3,3'-thiodipropionic acid dioctadecylester, 4,4'-thiobis(2-tert-butyl-5-methylphenol) bis(3-(dodecylthio)propionate), neopentanetetrayl 3-(dodecylthio)propionate, di(tridecyl) thiodipropionate, and mixtures of two or more of these. Most preferred is dilauryl thiodipropionate.

Thioester antioxidants may be used singly or in combinations of two, three or more.

The at least one thioester antioxidant is preferably present at 0.1 to 2.0 wt%, more preferably 0.2 to 1.0 wt%, more particularly preferably at 0.3 to 0.5 wt%, based on the total weight of the copolyetherester resin composition. If the at least one thioester antioxidant is present above 2.0 wt% based on the total weight of the composition, a deposit may appear on the surface of the composition ("blooming"). This may be aesthetically unpleasing in some uses. It is preferable to use thioester antioxidant at less than 1.0 wt%, more preferably 0.5 wt% or less, based on the total weight of the copolyetherester resin composition, to avoid blooming.

### At least one phosphite and/or phosphonite antioxidant

The compositions of the invention comprise at least one phosphite and/or phosphonite antioxidant. The phosphite antioxidant is selected from diphosphites, sterically hindered aryl phosphites, hindered amine stabilizer phosphites, pentaerythritol diphosphites, and mixtures of two or more of these.

Preferably, the phosphite stabilizer is a sterically hindered aryl phosphite compound, more preferably a pentaerythritol diphosphite. Preferably the phosphite has good hydrolysis resistance. The order of hydrolysis resistance of phosphites is typically sterically hindered aryl phosphites > unsubstituted aryl phosphites > araliphatic phosphites > aliphatic phosphites.

Particularly preferred are sterically hindered aryl phosphites and Hindered Amine Stabilizers (HAS) phosphites bearing 2,2,6,6-tetramethyl or 1,2,2,6,6-pentamethyl piperidinyl groups.

Suitable diphosphites are, for example, biphenylene diphosphites, pentaerythritol diphosphites, 4,4'-iso-propylidenediphenol diphosphites, and dipropyleneglycol diphosphites. The phosphite groups in these diphosphites suitably comprise alkyl and /or aryl groups, wherein the alkyl and aryl groups suitably are chosen from the alkyl and aryl groups mentioned above for the monophosphites.

An example of a suitable biphenylene diphosphite is tetrakis-(2,4-di-tert-butyl-phenyl)-4,4'- biphenylene diphosphite. Examples of suitable pentaerythritol diphosphites are bis(2,4-di-t-butylphenyl)pentaerythritol diphosphite and bis-(2,4-dicumylphenyl)pentaerythritol diphosphite. An example of a suitable 4,4'- iso-propylidenediphenol diphosphite is tetrakis(isodecyl) iso-propylidenediphenol diphosphite, and an example of a suitable dipropyleneglycol diphosphite is tetraphenyl dipropyleneglycol diphosphite.

When used, the preferred amount of phosphite present in the copolyetherester compositions of the present invention is from 0.05 to 2.0 wt%, more preferably 0.1 to 1.0 wt%, particularly preferably between 0.2 to 0.5 wt%, based on the total weight of the copolyetherester resin composition.

If phosphite antioxidant is present above 0.8 wt% based on the total weight of the copolyetherester resin composition, a deposit may appear on the surface of the composition ("blooming"). This may be aesthetically unpleasing in some uses. It is preferable to use phosphite antioxidant at levels of less than 0.8 wt%, more preferably 0.5 wt% or less, based on the total weight of the composition, to avoid blooming.

If it is desired to avoid blooming, solid phosphites are preferred over liquid phosphites.

When used, the preferred amount of phosphonite present in the copolyetherester compositions is from 0.05 to 3.0 wt%, more preferably 0.1 to 1.5 wt%, particularly preferably between 0.2 to 0.75 wt%, based on the total weight of the copolyetherester resin composition.

Some specific examples of suitable phosphite and phosphonite antioxidants include, without limitation, the following:
Tris(2,4-di-tert-butylphenyl) phosphite, 1,3,7,9-tetratert-butyl-11-(2-ethylhexoxy)-5h-benzo[d][1,3,2]benzodioxaphosphocine, 3,9-Bis(octadecyloxy)-2,4,8,10-tetraoxa-3,9-diphosphaspiro[5.5]undecane,
tert-butylphenyl)pentaerythritol diphosphite, Bis(2,4-dicumylphenyl) pentaerythritol diphosphite, Tris(nonylphenyl) phosphite, Isodecyl diphenyl phosphite, 4,4'-Isopropylidenediphenol C₁₂₋₁₅ alcohol phosphite
   2-ethylhexyl diphenyl phosphite, diisodecyl phenyl phosphite, Bis(2,6-di-ter-butyl-4-methylphenyl)pentaerythritol-diphosphite (ADK STAB PEP-36), Bis(2,4-di-t-butylphenyl)Pentaerythritol diphosphite (Ultranox 626), 2,2'2"-nitrilo[triethyl-tris[3,3',5,5'-tetra-tert-butyl-1,1'-biphenyl-2,2'-diyl]] phosphite, tetrakis(2,4-di-tert-butylphenyl)[1,1-biphenyl]-4,4'diylbisphosphonite (Songwon PQ) and mixtures of two or more of these.

More preferred are tris(2,4-di-*tert*-butylphenyl) phosphite, 1,3,7,9-tetratert-butyl-11-(2-ethylhexoxy)-5h-benzo[d][1,3,2]benzodioxaphosphocine, 3,9-Bis(octadecyloxy)-2,4,8,10-tetraoxa-3,9-diphosphaspiro[5.5]undecane, (Bis(2,6-di-*tert*-butyl-4-methylphenyl)pentaerythritol-diphosphite), Bis(2,4-di-tert-butylphenyl)pentaerythritol diphosphite, Bis(2,4-dicumylphenyl) pentaerythritol diphosphite, 2,2'2"-nitrilo[triethyl-tris[3,3',5,5'-tetra-tert-butyl-1,1'-biphenyl-2,2'-diyl]] phosphite, tetrakis(2,4-di-tert-butylphenyl)[1,1-biphenyl]-4,4'diylbisphosphonite (e.g. SONGNOX PQ) and mixtures of two or more of these.

Particularly preferred phosphites and/or phosphonites are selected from bis(2,4-di-*tert*-butylphenyl)pentaerythritol diphosphite, Bis(2,4-dicumylphenyl) pentaerythritol diphosphite, tetrakis(2,4-di-tert-butylphenyl)[1,1-biphenyl] 4,4'diylbisphosphonite and (Bis(2,6-di-*tert*-butyl-4-methylphenyl)pentaerythritol-diphosphite), most particularly bis(2,4-di-*tert-*butylphenyl)pentaerythritol diphosphite and Bis(2,4-dicumylphenyl) pentaerythritol diphosphite.

Phosphite or phosphonite antioxidants may be used singly or in combinations of two, three or more.

### At least one epoxy compound

The compositions of the invention comprise at least one epoxy compound, or a reaction product of an epoxy compound. For the purposes of this invention, the expression "epoxy compound" encompasses any compound bearing one or more epoxide group functionalities, including polymers having multiple epoxy functionalities, such as copolymers of ethylene/n-butyl acrylate/glycidyl methacrylate.

Preferred epoxy compounds have a maximum of two epoxide groups per molecule.

Preferred epoxy compounds are made by the reaction of epichlorohydrin with diphenylolpropane, diphenylolmethane, diamines, diacids and diols such as polypropylene glycol, and polymers having glycidyl groups such as ethylene/*n*-butyl acrylate/glycidyl methacrylate. Particularly preferred epoxy compounds are made by the reaction of epichlorohydrin with diphenylolpropane, diphenylolmethane or diols such as polypropylene glycol

Examples of suitable epoxy compounds include, without limitation:
poly(bisphenol A-co epichlorohydrin) glycidyl end-capped, poly(bisphenol F-co epichlorohydrin) glycidyl end-capped, 2,2-bis(4-hydroxyphenyl)propane-epichlorohydrin copolymers, tetraglycidyl ethers of tetraphenol ethane, diglycidyl ether of polypropylene glycol, and combinations of two or more of these. Most preferred is poly(bisphenol A-co epichlorohydrin) glycidyl end-capped.

All of the epoxy compounds mentioned herein may be used singly or in combinations of two, three or more.

To calculate the amount of epoxide groups in the composition the group -CHOCH₂ is used, which has a molecular weight of 43 g/mol. The epoxide groups from the epoxy compound are preferably present at 0.01 to 2.00 wt%, more preferably 0.05 to 1.00 wt%, more particularly preferably 0.1 to 0.6 wt%, based on the total weight of the copolyetherester resin composition.

### Optional additional additives

The copolyetherester resin compositions of the invention may further comprise additives that include, but are not limited to, one or more of the following components as well as combinations of two or more of these: metal deactivators, such as hydrazine and hydrazide; additional heat stabilizers; additional antioxidants; modifiers; colorants, lubricants, waxes, fillers and reinforcing agents, impact modifiers, flow enhancing additives, antistatic agents, crystallization promoting agents, conductive additives, viscosity modifiers, nucleating agents, plasticizers, mold release agents, scratch and mar modifiers, drip suppressants, adhesion modifiers and other processing aids known in the polymer compounding art. Preferably, the additives are selected from the group consisting of stabilizers, processing agents, metal deactivators, antioxidants, UV stabilizers, heat stabilizers, dyes and/or pigments. When used, additional additives are preferably present in amounts of about 0.05 to about 10 weight percent, based on the total weight of the copolyetherester resin composition.

The copolyetherester resin compositions of the invention may further comprise organic and inorganic fillers and reinforcing agents such as glass fibre, glass flakes, glass particles, carbon fibre, aramid fibre, mica, talc and wollastonite.

The compositions of the invention may additionally comprise one or more arylamine antioxidants. For example 4,4'-Bis(alpha, alpha-dimethylbenzyl)diphenylamine is a suitable arylamine antioxidant. When present, the one or more arylamine antioxidants is preferably present at 0.4 to 1.6 wt%, more preferably 0.6 to 1 wt%. In a preferred embodiment, the one or more arylamine antioxidants is 4,4'-Bis(alpha, alpha-dimethylbenzyl) diphenylamine at an amount of 0.8 wt%, based on the total weight of the copolyetherester resin composition.

### Preferred compositions

The following copolyetherester compositions are particularly preferred, subject to the requirement of the copolyetherester resin composition comprising:
(A) at least one copolyetherester;
(B) at least one phenolic antioxidant;
(C) at least one thioester antioxidant;
(D) at least one phosphite and/or phosphonite antioxidant;
(E) at least one epoxy compound,

wherein the at least one thioester antioxidant is selected from dilauryl thiodipropionate, thiodiethylene bis[3-[3,5-di-tert-butyl-4-hydroxyphenyl]-propionate], 3,3'-thiodipropionic acid dioctadecylester, 4,4'-thiobis(2-tert-butyl-5-methylphenol) bis(3-(dodecylthio)propionate), neopentanetetrayl 3-(dodecylthio)propionate, di(tridecyl) thiodipropionate, and mixtures of two or more of these, and
wherein the phosphite antioxidant is selected from diphosphites, sterically hindered aryl phosphites, hindered amine stabilizer phosphites, pentaerythritol diphosphites, and mixtures of two or more of these.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) at least one thioester antioxidant;
(D) at least one phosphite and/or phosphonite antioxidant;
(E) at least one epoxy compound or a reaction product of an epoxy compound.

A copolyetherester resin composition comprising:
(A) at least one copolyetherester;
(B) at least one phenolic antioxidant;
(C) thioester antioxidant selected from dilauryl thiodipropionate, Thiodiethylene bis[3-[3,5-di-tert-butyl-4-hydroxyphenyl]propionate];
(D) at least one phosphite and/or phosphonite antioxidant;
(E) at least one epoxy compound or a reaction product of an epoxy compound.

A copolyetherester resin composition comprising:
(A) at least one copolyetherester;
(B) at least one phenolic antioxidant;
(C) at least one thioester antioxidant;
(D) phosphite antioxidant selected from sterically hindered aryl phosphite antioxidants and mixtures of two or more of these;
(E) at least one epoxy compound or a reaction product of an epoxy compound.

A copolyetherester resin composition comprising:
(A) at least one copolyetherester;
(B) at least one phenolic antioxidant;
(C) at least one thioester antioxidant;
(D) at least one phosphite and/or phosphonite antioxidant;
(E) epoxy compound selected from epoxy compounds that are made by the reaction of epichlorohydrin with diphenylolpropane,
diphenylolmethane, diols such as as polypropylene glycol, and mixtures of two or more of these, or a reaction product of one of these epoxy compounds.

A copolyetherester resin composition comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) at least one thioester antioxidant;
(D) at least one phosphite and/or phosphonite antioxidant;
(E) at least one epoxy compound or a reaction product of an epoxy compound.

A copolyetherester resin composition comprising:
(A) at least one copolyetherester;
(B) at least one phenolic antioxidant;
(C) thioester antioxidant dilauryl thiodipropionate;
(D) at least one phosphite and/or phosphonite antioxidant;
(E) at least one epoxy compound or a reaction product of an epoxy compound.

A copolyetherester resin composition comprising:
(A) at least one copolyetherester;
(B) at least one phenolic antioxidant;
(C) at least one thioester antioxidant;
(D) phosphite antioxidant selected from bis(2,4-di-tert-butylphenyl)pentaerythritol diphosphite, Bis(2,4-dicumylphenyl) pentaerythritol diphosphite, and mixtures of these;
(E) at least one epoxy compound or a reaction product of an epoxy compound.

A copolyetherester resin composition comprising:
(A) at least one copolyetherester;
(B) at least one phenolic antioxidant;
(C) at least one thioester antioxidant;
(D) at least one phosphite and/or phosphonite antioxidant;
(E) epoxy compound selected from epoxy compounds that are made by the reaction of epichlorohydrin with diphenylolpropane, diols such as polypropylene glycol, and combinations of two or more thereof, or at least one reaction product of one of these epoxy compounds.

A copolyetherester resin composition comprising:
(A) at least one copolyetherester;
(B) at least one phenolic antioxidant;
(C) at least one thioester antioxidant;
(D) bis(2,4-di-tert-butylphenyl) pentaerythritol diphosphite;
(E) at least one epoxy compound or a reaction product of an epoxy compound.

A copolyetherester resin composition comprising:
(A) at least one copolyetherester;
(B) at least one phenolic antioxidant;
(C) at least one thioester antioxidant;
(D) at least one phosphite and/or phosphonite antioxidant;
(E) poly(bisphenol A-co epichlorohydrin) glycidyl end-capped, or a reaction product of this epoxy compound.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant selected from dilauryl thiodipropionate, Thiodiethylene bis[3-[3,5-di-tert-butyl-4-hydroxyphenyl]propionate], and mixtures of these;
(D) phosphite antioxidant selected from sterically hindered aryl phosphite antioxidants, and mixtures of two or more of these;
(E) epoxy compound selected from epoxy compounds that are made by the reaction of epichlorohydrin with diphenylolpropane, diols such as polypropylene glycol, and mixtures of two or more of these, or a reaction product of at least one of these epoxy compounds.

A copolyetherester resin composition comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) thioester antioxidant selected from dilauryl thiodipropionate, Thiodiethylene bis[3-[3,5-di-tert-butyl-4-hydroxyphenyl]propionate], and mixtures of these;
(D) phosphite antioxidant selected from sterically hindered aryl phosphite antioxidants, and mixtures of two or more of these;
(E) epoxy compound selected from epoxy compounds that are made by the reaction of epichlorohydrin with diphenylolpropane, diols such as polypropylene glycol, and mixtures of two or more of these, or a reaction product of at least one of these epoxy compounds.

A copolyetherester resin composition comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) thioester antioxidant dilauryl thiodipropionate;
(D) phosphite antioxidant selected from sterically hindered aryl phosphite antioxidants, and mixtures of two or more of these;
(E) epoxy compound selected from epoxy compounds that are made by the reaction of epichlorohydrin with diphenylolpropane, diols such as polypropylene glycol, and mixtures of two or more of these, or a reaction product of at least one of these epoxy compounds.

A copolyetherester resin composition comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) thioester antioxidant dilauryl thiodipropionate;
(D) phosphite antioxidant selected from bis(2,4-di-tert-butylphenyl)pentaerythritol diphosphite, bis(2,4-dicumylphenyl) pentaerythritol diphosphite, and mixtures of these;
(E) epoxy compound selected from epoxy compounds that are made by the reaction of epichlorohydrin with diphenylolpropane, diols such as polypropylene glycol, and mixtures of two or more of these, or a reaction product of at least one of these epoxy compounds.

A copolyetherester resin composition comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) thioester antioxidant dilauryl thiodipropionate;
(D) phosphite antioxidant selected from bis(2,4-di-tert-butylphenyl)pentaerythritol diphosphite, bis(2,4-dicumylphenyl) pentaerythritol diphosphite, and mixtures of these;
(E) epoxy compound selected from poly(bisphenol A-co epichlorohydrin) glycidyl end-capped, poly(bisphenol F-co epichlorohydrin) glycidyl end-capped, 2,2-bis(4-hydroxyphenyl)propane-epichlorohydrin copolymers, from epoxy compounds that are made by the reaction of epichlorohydrin with diols such as polypropylene glycol, and combinations of two or more thereof, or a reaction product of at least one of these epoxy compounds.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant dilauryl thiodipropionate;
(D) phosphite antioxidant selected from sterically hindered aryl phosphite antioxidants, and mixtures of two or more of these;
(E) epoxy compound selected from epoxy compounds that are made by the reaction of epichlorohydrin with diphenylolpropane, diols such as polypropylene glycol and mixtures of two or more of these, or a reaction product of at least one of these epoxy compounds.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant selected from dilauryl thiodipropionate, Thiodiethylene bis[3-[3,5-di-tert-butyl-4-hydroxyphenyl]propionate], and mixtures of these;
(D) phosphite antioxidant selected from bis(2,4-di-tert-butylphenyl)pentaerythritol diphosphite, bis(2,4-dicumylphenyl) pentaerythritol diphosphite, and mixtures of these;
(E) epoxy compound selected from epoxy compounds that are made by the reaction of epichlorohydrin with diphenylolpropane, diols such as polypropylene glycol, and mixtures of two or more of these, or a reaction product of at least one of these epoxy compounds.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant selected from dilauryl thiodipropionate, Thiodiethylene bis[3-[3,5-di-tert-butyl-4-hydroxyphenyl]propionate], and mixtures of these;
(D) phosphite antioxidant selected from sterically hindered aryl phosphite antioxidants, and mixtures of two or more of these;
(E) epoxy compound selected from poly(bisphenol A-co epichlorohydrin) glycidyl end-capped, poly(bisphenol F-co epichlorohydrin) glycidyl end-capped, 2,2-bis(4-hydroxyphenyl)propane-epichlorohydrin copolymers, from epoxy compounds that are made by the reaction of epichlorohydrin with diols such as polypropylene glycol, and mixtures of two or more of these, or a reaction product of at least one of these epoxy compounds.

A copolyetherester resin composition comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant dilauryl thiodipropionate;
(D) phosphite antioxidant bis(2,4-di-tert-butylphenyl)pentaerythritol diphosphite;
(E) epoxy compound poly(bisphenol A-co epichlorohydrin) glycidyl end-capped, or a reaction product of this epoxy compound.

In these particularly preferred compositions and in all the copolyetherester resin compositions described herein, the amounts of components (A), (B), (C), (D), (E), and other components, if present, are complementary, that is, the sum of the weight percentages of the components of the copolyetherester resin composition is 100 wt%.

### Manufacture

The copolyetherester resin compositions of the invention are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention.

The polymeric components and non-polymeric ingredients of the copolyetherester compositions of the invention may be added to a melt mixer, such as, for example, a single or twin-screw extruder; a blender; a single or twin-screw kneader; or a Banbury mixer, either simultaneously through a single step addition, or in a stepwise fashion, and then melt-mixed. When adding the polymeric components and non-polymeric ingredients in a stepwise fashion, a portion of the polymeric components and/or non-polymeric ingredients are first added and melt-mixed with the remaining polymeric components and non-polymeric ingredients being subsequently added and further melt-mixed until a well-mixed composition is obtained.

Those of skill in the art are able to select compounding conditions that may promote or retard the reactivity of the epoxy compound. For example, reactivity may be accelerated at higher compounding temperatures, in the presence of an optional catalyst, or during longer residence times in the melt-mixing phase. In some preferred processes, the compounding is carried out at a temperature above 200°C, and it is expected that some epoxy groups will react with copolyetherester carboxylic acid ends during the compounding. In other preferred processes, some epoxy groups remain unreacted after the compounding is completed. In these preferred processes, the amount of the optional catalyst may be reduced, or the catalyst may be omitted. In yet other preferred processes, all or a portion of the epoxy groups remaining in the composition after compounding may react with copolyetherester acid ends formed by chain scission via thermoxidation, when the composition is exposed to dry heat at 150°C.

### Applications

The copolyetherester resin compositions of the invention may be shaped into articles using methods known to those skilled in the art, such as injection molding, blow molding, injection blow molding, extrusion, thermoforming, melt casting, vacuum molding, rotational molding, calendar molding, slush molding, filament extrusion and fiber spinning. These shaping processes are usually operated at temperatures above the melting point of the copolyetherester composition by about 20 to 30°C. Such articles may include films, fibers and filaments, wire and cable coatings; photovoltaic cable coatings, optical fiber coatings, tubing and pipes; fabrics or textiles made fibers and filaments, e.g., used in clothing or carpets; films and membranes such as breathable membranes in roofing and building/construction; motorized vehicle parts such as body panels, air bag doors, dashboards, engine covers, rocker panels, constant velocity joint boots, air ducts or air filter covers; components for household appliances, such as washers, dryers, refrigerators and heating-ventilation-air conditioning appliances; connectors in electrical/electronic applications; components for electronic devices, such as computers; components for office, indoor, and outdoor furniture; and footwear components.

The copolyetherester compositions of the invention show excellent heat-stability. In a preferred embodiment, the compositions of the invention show time to 50% retention of strain at break, after heat ageing at 150°C of at least 720 hours, more preferably at least 750 hours, more particularly preferably at least 780 hours, when strain at break is measured at 23°C according to ISO527-2.

Alternatively, in a preferred embodiment, the compositions of the invention show a relative retention of strain at break, after 600 hours exposure to air at 150°C, of greater than 60%, when strain at break is measured at 23°C according to ISO527-2.

Alternatively, in a preferred embodiment, the compositions of the invention show a relative retention of strain at break, after 800 hours exposure to air at 150°C, of greater than 40%, when strain at break is measured at 23°C according to ISO527-2.

Alternatively, in a preferred embodiment, the compositions of the invention show a relative retention of strain at break, after 1,000 hours exposure to air at 150°C, of greater than 30%, when strain at break is measured at 23°C according to ISO527-2.

Relative retention of strain at break is the ratio of strain at break after x hours exposure at elevated temperature (e.g. 150°C) to the strain at break before heat exposure. The ratio is expressed in %. All retention of strain at break measurements before or after heat-ageing are measured according to ISO527-2. The strain at break measurement is done at 23°C with a speed of 200mm/min. The distance between extensometers is 20mm and the distance between tensile machine clamps is 40mm. The injection molded test specimen according ISO527-2/5a are stored in the testing laboratory under ambient conditions at least one day (approximately 12 to 36 hours) before any measurement.

This heat-stability makes the compositions of the invention particularly suitable for use in fluid ducts and joint protection, particularly those that will be exposed to elevated temperatures. This includes automotive fluid ducts, such as air ducts, constant velocity joint (CVJ) boots, and rack and pinion boots.

The following examples are provided to describe the invention in further detail. These examples, which set forth a preferred mode presently contemplated for carrying out the invention, are intended to illustrate and not to limit the invention.

### EXAMPLES

The base resin was a copolyetherester having a shore D hardness of 55D as measured according to ISO7619-1 with type D durometer. The base resin was stabilized with phenolic antioxidants as described in Table 1, below, to give a total phenolic antioxidant content of 0.3 wt% based on the total weight of the "base resin formulation," which consists of copolyetherester and the phenolic antioxidants described below. This copolyetherester has hard segments composed of polybutylene terephthalate and approximately 40 % by weight of soft segments composed of polyether terephthalate. The fraction of hard segments is approximately 60% by weight. The polyether blocks are derived from polytetramethylene glycol and have a molecular weight of approximately 1000 g/mol. The copolyetherester has a modulus in tension at 23°C, in accordance with ISO standard 527-2 and measured under a speed of 1mm/min, of approximately 180MPa.

**Table 1**

| **Antioxidant** | **Description** | **Amount** |
|---|---|---|
| Irganox 1019 | N,N'-propane-1,3diylbis [3-(3,5-di-ter-butyl-4-hydroxyphenyl) propionamide]. | 0.15 wt% |
| Irganox 1098 | N,N'-Hexane-1,6 diylbis [3-(3,5-dibutyl-4-hydroxyphenyl) propionamide]. | 0.15 wt% |

The compositions of the invention and comparative compositions were compounded in a 30 mm diameter Werner & Pfleiderer extruder. The extruder is a twin-screw compounder with a length/diameter ratio of 29/1. Temperature of the barrel was set at 220°C. The throughput was about 13 kg per hour with a torque varying from 83 to 88%, based on the maximum torque allowed by the extruder. The various additives used are listed in Table 2, below:

**Table 2**

| **Tradename** | **Description** | **Type of stabilizer** |
|---|---|---|
| Naugard 445 | 4,4'-Bis(alpha, alpha-dimethylbenzyl)diphenylamine | arylamine antioxidant |
| Songnox DLTDP | Dilauryl thiodipropionate | thioester antioxidant |
| Songnox 6260FF | bis(2,4-di-tert-butylphenyl) pentaerythritol diphosphite | Diphosphite antioxidant |
| Doverphos S-9228 | Bis (2,4-dicumylphenyl) pentaerythritol diphosphite | Diphosphite antioxidant |
| ADK STAB PEP-36 | Bis(2,6-di-*tert*-butyl-4-methylphenyl)pentaerythritol-diphosphite | Diphosphite antioxidant |
| Songnox PQ | tetrakis(2,4-di-tert-butylphenyl)[1,1-biphenyl]-4,4'-diylbisphosphonite | Phosphonite antioxidant |
| Ultranox 626 | Bis(2,4-di-tert-butylphenyl)pentaerythritol diphosphite | phosphite antioxidant |
| CHS Epoxy 171 | Poly(Bisphenol A-co epichlorohydrin) glycidyl end-capped | epoxy compound |

The base resin was compounded with the ingredients in the amounts shown in Table 1. Tensile bars according to the dimensions specified in ISO527-2/5a were injection moulded with a melt temperature of 235°C and a mold temperature of about 45°C. The bars were exposed to air flow at 150°C in an oven. Bars were taken from the oven at predetermined intervals, cooled down to 23°C, stored at room temperature in the laboratory for a least one day and then stretched to measure their tensile properties, measuring strain at break according to ISO527-2 at 23°C under a speed of 200mm/min.

Change in strain at break with time of heat exposure gives a good assessment of polymer degradation due to thermo-oxidation. From the data, a value for the time required to have a retention of strain at break of 50% was determined for each composition. This data is shown in Table 3.

| **Table 3. Time for 50% retention of strain at break for comparative compositions (C1-C8) and a composition of the invention (E1), compositions are in wt% based on the total weight of the composition** | | | | | | | | | |
|---|---|---|---|---|---|---|---|---|---|
| | **C1** | **C2** | **C3** | **C4** | **C5** | **C6** | **C7** | **C8** | **E1** |
| **Irganox 1019 + Irganox 1098 (phenolic antioxidants)** | 0.3 | 0.3 | 0.3 | 0.3 | 0.3 | 0.3 | 0.3 | 0.3 | 0.3 |
| **Naugard 445 (arylamine antioxidant)** | - | - | 1.2 | 1.2 | 0.6 | 1.2 | 1.2 | - | - |
| **SONGNOX DLTDP (thioester antioxidant)** | 0.6 | - | - | 0.6 | - | 0.6 | - | - | 0.6 |
| **Ultranox 626 (diphosphite antioxidant)** | - | 0.6 | 0.6 | 0.6 | 0.3 | - | - | - | 0.6 |
| **CHS epoxy 171 (di-epoxy compound)** | - | - | 4 | - | - | 4 | - | 4 | 4 |
| **Time to get 50% reduction in strain at break (hours)** | 240 | 560 | 640 | 600 | 390 | 470 | 260 | 250 | 800 |

The data in Table 3 show that the combination of thioester, phosphite, epoxy and phenolic antioxidants provides the best heat stability to the copolyetherester elastomer with 50% retention of strain at break after 800-hours of exposure to air flow at 150°C.

Additional phosphites and phosphonites were used in compositions according to the invention E2 through E5. The results are listed in Table 4.

The data in Table 4 show that the combination of thioester, phosphite, epoxy and phenolic antioxidants provides the best heat stability to the copolyetherester elastomer.

Relative retention of strain at break is the ratio of strain at break after x hours exposure at elevated temperature (e.g. 150°C) to the strain at break before heat exposure. The ratio is expressed in %. All retention of strain at break measurements before or after heat ageing are done according to ISO527-2 at 23°C under a speed of 200mm/min.

While certain of the preferred embodiments of this invention have been described and specifically exemplified above, it is not intended that the invention be limited to such embodiments. Various modifications may be made without departing from the scope and spirit of the invention, as set forth in the following claims.

| Table 4. Retention of strain at break for comparative compositions (C9-C12) and compositions of the invention (E2-E5). Compositions are in wt% based on the total weight of the composition | | | | | | | | |
|---|---|---|---|---|---|---|---|---|
| | **C9** | **E2** | **C10** | **E3** | **C11** | **E4** | **C12** | **E5** |
| **Irganox 1019 + Irganox 1098 (phenolic antioxidants)** | 0.3 | 0.3 | 0.3 | 0.3 | 0.3 | 0.3 | 0.3 | 0.3 |
| **Naugard 445 (arylamine antioxidant)** | 0.8 | 0.8 | 0.8 | 0.8 | 0.8 | 0.8 | 0.8 | 0.8 |
| **SONGNOX DLTDP (thioester antioxidant)** | - | 0.35 | - | 0.35 | - | 0.35 | - | 0.35 |
| **SONGNOX 6260FF (diphosphite antioxidant)** | 0.5 | 0.35 | - | - | - | - | - | - |
| **Doverphos S-9228 (diphosphite antioxidant)** | - | - | 0.7 | 0.49 | - | - | - | - |
| **ADK STB PEP-36 (diphosphite antioxidant)** | - | - | - | - | 0.52 | 0.36 | - | - |
| **Songnox PQ (phosphonite antioxidant)** | - | - | - | - | - | - | 0.33 | 0.58 |
| **Phosphorus estimated content (wt%)** | 0.051 | 0.036 | 0.051 | 0.036 | 0.051 | 0.036 | 0.020 | 0.036 |
| **CHS epoxy 171 (di-epoxy compound)** | - | 3 | - | 3 | - | 3 | - | 3 |
| **Relative retention of strain at break after 600 h exposure to hot air at 150°C** | 29 | 91 | 11 | 76 | 13 | 68 | 5 | 83 |
| **Relative retention of strain at break after 800 h exposure to hot air at 150°C** | 4 | 70 | 2 | 50 | 2 | 50 | 1 | 48 |
| **Relative retention of strain at break after 1000 h exposure to hot air at 150°C** | 1 | 53 | 1 | 54 | 2 | 36 | 1 | 34 |

## Claims

1. A copolyetherester resin composition comprising:
(A) at least one copolyetherester;
(B) at least one phenolic antioxidant;
(C) at least one thioester antioxidant;
(D) at least one phosphite and/or phosphonite antioxidant; and
(E) at least one epoxy compound, or a reaction product of the at least one epoxy compound,
wherein the at least one thioester antioxidant is selected from dilauryl thiodipropionate, thiodiethylene bis[3-[3,5-di-tert-butyl-4-hydroxyphenyl]-propionate], 3,3'-thiodipropionic acid dioctadecylester, 4,4'-thiobis(2-tert-butyl-5-methylphenol) bis(3-(dodecylthio)propionate), neopentanetetrayl 3-(dodecylthio)propionate, di(tridecyl) thiodipropionate, and mixtures of two or more of these, and
wherein the phosphite antioxidant is selected from diphosphites, sterically hindered aryl phosphites, hindered amine stabilizer phosphites, pentaerythritol diphosphites, and mixtures of two or more of these.

2. The copolyetherester resin composition of claim 1, wherein the at least one copolyetherester is selected from copolyetheresters prepared from monomers comprising (1) poly(tetramethylene oxide) glycol or poly(trimethylene oxide) glycol, poly(propylene oxide) glycol and mixtures of two or more of these; (2) a dicarboxylic acid selected from the group consisting of isophthalic acid, terephthalic acid and mixtures of these; and (3) a diol selected from the group consisting of 1,4-butanediol, 1,3-propanediol and mixtures of these; or wherein the at least one copolyetherester is selected from copolyetheresters prepared from monomers comprising (1) poly(tetramethylene oxide) glycol; (2) terephthalic acid; and (3) a diol selected from the group consisting of 1,4-butanediol, 1,3-propanediol and mixtures of these.

3. The copolyetherester resin composition of claim 1 or claim 2, wherein the at least one phenolic antioxidant is selected from 1,3,5-Tris(3,5-di-tert-butyl-4-hydroxybenzyl)-s-triazine-2,4,6(1H,3H,5H)-trione (AO-20), 1,1,3-Tris(2-methyl-4-hydroxy-5-tert-butylphenyl) butane (AO-30), 4,4'-butylidene-bis(6-tert-butyl-m-cresol) (AO-40), octadecyl 3-(3,5-di-tert-butyl-4-hydroxyphenyl)propionate (AO-50), benzenepropanoic acid, 3-(1,1-dimethylethyl)-4-hydroxy-5-methyl- (AO-80), 1,3,5-Trimethyl-2,4,6-tris(3,5-di-tert-butyl-4-hydroxybenzyl)benzene (AO-330), pentaerythritol tetrakis (3-(3,5-di-tert-butyl-4-hydroxyphenyl)propionate (EVERNOX-10), octadecyl 3-(3,5-di-tert-butyl-4-hydroxyphenyl)propionate (EVERNOX-76), octyl-3,5-di-tert-butyl-4-hydroxy-hydrocinnamate (EVERNOX-1135), 1,2-Bis(3,5-di-tert-butyl-4-hydroxyhydrocinnamoyl)hydrazine (EVERNOX MD-1024), 3,3'-Bis(3,5-di-tert-butyl-4-hydroxyphenyl)-N,N'-hexamethylenedipropionamide (EVERNOX-1098), N,N'-propane-1,3-diylbis [3-(3,5-di-tert-butyl-4-hydroxyphenyl) propionamide], and mixtures of two or more of these; and preferably wherein the at least one phenolic antioxidant is selected from N,N'-propane-1,3-diylbis [3-(3,5-di-tert-butyl-4-hydroxyphenyl) propionamide], N,N'-Hexane-1,6-diylbis [3-(3,5-dibutyl-4-hydroxyphenyl) propionamide], and mixtures of these.

4. The copolyetherester resin composition of any one preceding claim, wherein the at least one phenolic antioxidant is a 1:1 mixture of N,N'-propane-1,3-diylbis [3-(3,5-di-tert-butyl-4-hydroxyphenyl) propionamide] and N,N'-Hexane-1,6 diylbis [3-(3,5-di-butyl-4-hydroxyphenyl) propionamide].

5. The copolyetherester resin composition of any one preceding claim, wherein the at least one thioester antioxidant is selected from dilauryl thiodipropionate, thiodiethylene bis[3-[3,5-di-tert-butyl-4-hydroxyphenyl]propionate], and mixtures of these, preferably wherein the at least one thioester antioxidant is dilauryl thiodipropionate.

6. The copolyetherester resin composition of any one preceding claim, wherein the at least one phosphite and/or phosphonite antioxidant is selected from tris(2,4-di-*tert*-butylphenyl) phosphite, 1,3,7,9-tetratert-butyl-11-(2-ethylhexoxy)-5h-benzo[d][1,3,2]benzodioxaphosphocine, Bis(2,4-dicumylphenyl) pentaerythritol diphosphite, Tris(nonylphenyl) phosphite, Isodecyl diphenyl phosphite, 4,4'-Isopropylidenediphenol C₁₂₋₁₅ alcohol phosphite, 2-ethylhexyl diphenyl phosphite, triphenyl phosphite, diisodecyl phenyl phosphite, Bis(2,6-di-ter-butyl-4-methylphenyl)pentaerythritol-di-phosphite (ADK STAB PEP-36), Bis(2,4-di-t-butylphenyl)Pentaerythritol diphosphite (Ultranox 626), 2,2'2"-nitrilo[triethyl-tris[3,3',5,5'-tetra-tert-butyl-1,1'-biphenyl-2,2'-diyl]] phosphite, tetrakis(2,4-di-tert-butylphenyl)[1,1-biphenyl]-4,4'diylbisphosphonite, and mixtures of two or more of these; and preferably wherein the at least one phosphite and/or phosphonite antioxidant is selected from bis(2,4-di-tert-butylphenyl)pentaerythritol diphosphite, bis(2,6-di-ter-butyl-4-methylphenyl)pentaerythritol-diphosphite, bis (2,4-dicumylphenyl) pentaerythritol diphosphite, tetrakis(2,4-di-tert-butylphenyl)[1,1-biphenyl]-4,4'diylbisphosphonite and mixtures of two or more of these.

7. The copolyetherester resin composition of any one preceding claim, wherein the at least one epoxy compound is selected from those having two or more epoxy groups per molecule, and mixtures of two or more of these.

8. The copolyetherester resin composition of any one preceding claim, wherein the at least one epoxy compound is selected from poly(bisphenol A-co epichlorohydrin) glycidyl end-capped, poly(bisphenol F-co epichlorohydrin) glycidyl end-capped, tetraglycidyl ethers of tetraphenol ethane, polypropyleneglycol diglycidyl ether copolymers of ethylene/n-butyl acrylate/glycidyl methacrylate, copolymers of ethylene/n-methyl acrylate/glycidyl methacrylate, resorcinol diglycidyl ether, and mixtures of two or more of these; and preferably wherein the at least one epoxy compound is poly(bisphenol A-co epichlorohydrin) glycidyl end-capped.

9. The copolyetherester resin composition of any one preceding claim, which additionally comprises at least one arylamine antioxidant, and preferably wherein the arylamine antioxidant is 4,4'-Bis(alpha, alpha-dimethylbenzyl)diphenylamine.

10. The copolyetherester resin composition of any one preceding claim, wherein the copolyetherester is present in an amount of 50 to 98 wt%; or wherein the at least one phenolic antioxidant is present in an amount of 0.1 to 0.6 wt%; or wherein the at least one thioester antioxidant is present at from 0.1 to 2.0 wt%; or wherein the at least one phosphite and/or phosphonite antioxidant is present at an amount of 0.05 to 2.0 wt%; or wherein the at least one epoxy compound is present in an amount such that the epoxide groups are present in the composition at 0.01 to 2.0 wt%; or wherein the arylamine antioxidant is present at an amount of 0.4 to 1.6 wt%, based on the total weight of the copolyetherester resin composition.

11. The copolyetherester resin composition of any one preceding claim, comprising:
(A) at least one copolyetherester;
(B) phenolic antioxidants being a 1:1 mixture of N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide];
(C) thioester antioxidant dilauryl thiodipropionate;
(D) phosphite antioxidant selected from bis(2,4-di-*tert-*butylphenyl)pentaerythritol diphosphite, bis(2,4-dicumylphenyl) pentaerythritol diphosphite, and mixtures of these; and
(E) epoxy compound selected from poly(bisphenol A-co epichlorohydrin) glycidyl end-capped, poly(bisphenol F-co epichlorohydrin) glycidyl end-capped, tetraglycidyl ethers of tetraphenol ethane, Polypropylenglycol diglycidyl ether, and mixtures of two or more of these; or a reaction product of the epoxy compound.

12. The copolyetherester resin composition of any one of claims 1 to 10, comprising:
(A) at least one copolyetherester;
(B) phenolic antioxidants selected from N,N'-propane-1,3-diylbis [3-(3,5-di-tert-butyl-4-hydroxyphenyl) propionamide], N,N'-Hexane-1,6 diylbis [3-(3,5-di-butyl-4-hydroxyphenyl) propionamide], and mixtures of these;
(C) thioester antioxidant dilauryl thiodipropionate;
(D) phosphite antioxidant bis(2,4-di-tert-butylphenyl)pentaerythritol diphosphite; and
(E) epoxy compound poly(bisphenol A-co epichlorohydrin) glycidyl end-capped; or a reaction product of the epoxy compound.

13. The copolyetherester resin composition of any one preceding claim having a time to retention of 50% strain at break measured according to ISO527-2 using test pieces according to ISO527-2/5a of at least 720 hours.

14. A part made from the copolyetherester resin composition of any one preceding claim.

15. The part of claim 14, which is a fluid duct, preferably an automotive fluid duct or an automotive gas duct.

## Patentansprüche

1. Copolyetheresterharzzusammensetzung, umfassend:
(A) mindestens einen Copolyetherester;
(B) mindestens ein phenolisches Antioxidans;
(C) mindestens ein Thioester-Antioxidans;
(D) mindestens ein Phosphit- und/oder Phosphonit-Antioxidans; und
(E) mindestens eine Epoxidverbindung oder ein Reaktionsprodukt der mindestens einen Epoxidverbindung,
wobei das mindestens eine Thioester-Antioxidans ausgewählt ist aus Dilaurylthiodipropionat, Thiodiethylen bis[3-[3,5-di-tert-butyl-4-hydroxyphenyl]-propionat], 3,3'-Thiodipropionsäure-Dioctadecylester, 4,4'-Thiobis(2-tert-butyl-5-methylphenol)bis(3-(dodecylthio)propionat), Neopentantetrayl-3-(dodecylthio)propionat, Di(tridecyl)thiodipropionat und Gemischen aus zwei oder mehr davon, und
wobei das Phosphit-Antioxidans ausgewählt ist aus Diphosphiten, sterisch gehinderten Arylphosphiten, gehinderten Aminstabilisatorphosphiten, Pentaerythritdiphosphiten und Gemischen aus zwei oder mehr davon.

2. Copolyetheresterharzzusammensetzung nach Anspruch 1, wobei der mindestens eine Copolyetherester ausgewählt ist aus Copolyetherestern, die aus Monomeren hergestellt werden, welche (1) Poly(tetramethylenoxid)glykol oder Poly(trimethylenoxid)glykol, Poly(propylenoxid)glykol und Gemischen von zwei oder mehr davon; (2) eine Dicarbonsäure, ausgewählt aus der Gruppe bestehend aus Isophthalsäure, Terephthalsäure und Gemischen davon; und (3) ein Diol, ausgewählt aus der Gruppe bestehend aus 1,4-Butandiol, 1,3-Propandiol und Gemischen davon, umfassen; oder wobei der mindestens eine Copolyetherester ausgewählt ist aus Copolyetherestern, die aus Monomeren hergestellt werden, welche (1) Poly(tetramethylenoxid)glykol, (2) Terephthalsäure und (3) ein Diol, ausgewählt aus der Gruppe bestehend aus 1,4-Butandiol, 1,3-Propandiol und Gemischen davon, umfassen.

3. Copolyetheresterharzzusammensetzung nach Anspruch 1 oder 2, wobei das mindestens eine phenolische Antioxidans ausgewählt ist aus 1,3,5-Tris(3,5-di-tert-butyl-4-hydroxybenzyl)-s-triazin-2,4,6(1H,3H,5H)-trion (AO-20), 1,1,3-Tris(2-methyl-4-hydroxy-5-tert-butylphenyl)butan (AO-30), 4,4'-Butyliden-bis(6-tert-butyl-m-kresol) (AO-40), Octadecyl-3-(3,5-di-tert-butyl-4-hydroxyphenyl)propionat (AO-50), Benzolpropansäure, 3-(1,1-Dimethylethyl)-4-hydroxy-5-methyl- (AO-80), 1,3,5-Trimethyl-2,4,6- Tris(3,5-di-tert-butyl-4-hydroxybenzyl)benzol (AO-330), Pentaerythritoltetrakis(3-(3,5-di-tert-butyl-4-hydroxyphenyl)propionat (EVERNOX-10), Octadecyl-3-(3,5-di-tert-butyl-4-hydroxyphenyl)propionat (EVERNOX-76), Octyl-3,5-di-tert-butyl-4-hydroxyhydrocinnamat (EVERNOX-1135), 1,2-Bis(3,5-di-tert-butyl-4-hydroxyhydrocinnamoyl)hydrazin (EVERNOX MD-1024), 3,3'-Bis(3,5-di-tert-butyl-4-hydroxyphenyl)-N,N'-hexamethylendipropionamid (EVERNOX-1098), N,N'-Propan-1,3-diylbis [3-(3,5-di-tert-butyl-4-hydroxyphenyl)propionamid] und Gemischen aus zwei oder mehr davon; vorzugsweise wobei das mindestens eine phenolische Antioxidans ausgewählt ist aus N,N'-Propan-1,3-diylbis [3-(3,5-di-tert-butyl-4-hydroxyphenyl)propionamid], N,N'-Hexan-1,6-diylbis [3-(3,5-di- butyl-4-hydroxyphenyl)propionamid] und Gemischen davon.

4. Copolyetheresterharzzusammensetzung nach einem der vorstehenden Ansprüche, wobei das mindestens eine phenolische Antioxidans ein 1:1-Gemisch aus N,N'-Propan-1,3-diylbis [3-(3,5-di-tert-butyl-4-hydroxyphenyl)propionamid] und N,N'-Hexan-1,6-diylbis [3-(3,5-di-butyl-4-hydroxyphenyl)propionamid] ist.

5. Copolyetheresterharzzusammensetzung nach einem der vorstehenden Ansprüche, wobei das mindestens eine Thioester-Antioxidans ausgewählt ist aus Dilaurylthiodipropionat, Thiodiethylen bis[3-[3,5-di-tert-butyl-4-hydroxyphenyl]propionat] und Gemischen davon, vorzugsweise wobei es sich bei dem mindestens einen Thioester-Antioxidans um Dilaurylthiodipropionat handelt.

6. Copolyetheresterharzzusammensetzung nach einem der vorstehenden Ansprüche, wobei mindestens ein Phosphit- und/oder Phosphonit-Antioxidans ausgewählt ist aus Tris(2,4-di-*tert-*butylphenyl)phosphit, 1,3,7,9-Tetrat-tert-butyl-11 -(2-ethylhexoxy)-5h-benzo[d][1,3,2]benzodioxaphosphocin, Bis(2,4-dicumylphenyl)pentaerythritdiphosphit, Tris(nonylphenyl)phosphit, Isodecyldiphenylphosphit, 4,4'-Isopropylidendiphenol C₁₂₋₁₅-Alkoholphosphit, 2-Ethylhexyldiphenylphosphit, Triphenylphosphit, Diisodecylphenylphosphit, Bis(2,6-di-tert-butyl-4-methylphenyl)pentaerythritdiphosphit (ADK STAB PEP-36), Bis(2,4-di-tert-butylphenyl)pentaerythritdiphosphit (Ultranox 626), 2,2'2"- nitrilo[triethyl-tris[3,3',5,5'-tetra-tert-butyl-1,1 '-biphenyl-2,2'-diyl]]phosphit, tetrakis(2,4-di-tert-butylphenyl)[1,1-biphenyl]-4,4'diylbisphosphonit und Gemischen aus zwei oder mehr davon; vorzugsweise wobei mindestens ein Phosphit- und/oder Phosphonit-Antioxidans ausgewählt ist aus Bis(2,4-di-ferr-butylphenyl)pentaerythritoldiphosphit, Bis(2,6-di-tert-butyl-4-methylphenyl)pentaerythritoldiphosphit, Bis(2,4-dicumylphenyl)pentaerythritoldiphosphit, Tetrakis(2,4-di-tert-butylphenyl)[1,1 -biphenyl]-4,4'diylbisphosphonit und Gemischen aus zwei oder mehr davon.

7. Copolyetheresterharzzusammensetzung nach einem der vorstehenden Ansprüche, wobei die mindestens eine Epoxidverbindung ausgewählt ist aus solchen mit zwei oder mehr Epoxidgruppen pro Molekül und Gemischen aus zwei oder mehr davon.

8. Copolyetheresterharzzusammensetzung nach einem der vorstehenden Ansprüche, wobei die mindestens eine Epoxidverbindung ausgewählt ist aus Poly(bisphenol-A-co-Epichlorhydrin) mit Glycidyl-Endgruppen, Poly(bisphenol-F-co-Epichlorhydrin) mit Glycidyl-Endgruppen, Tetraglycidylethern von Tetraphenolethan, Polypropylenglykol-Diglycidylether-Copolymeren aus Ethylen/n-Butylacrylat/Glycidylmethacrylat, Copolymere aus Ethylen/n-Methylacrylat/Glycidylmethacrylat, Resorcin-Diglycidylether und Gemischen aus zwei oder mehr davon; und vorzugsweise wobei die mindestens eine Epoxidverbindung Poly(bisphenol A-co-Epichlorhydrin) mit Glycidyl-Endgruppen ist.

9. Copolyetheresterharzzusammensetzung nach einem der vorstehenden Ansprüche, die zusätzlich mindestens ein Arylamin-Antioxidans enthält, vorzugsweise wobei es sich bei dem Arylamin-Antioxidans um 4,4'-Bis(alpha,alpha-dimethylbenzyl)diphenylamin handelt.

10. Copolyetheresterharzzusammensetzung nach einem der vorstehenden Ansprüche, wobei der Copolyetherester in einer Menge von 50 bis 98 Gew.-% vorliegt; oder wobei mindestens ein phenolisches Antioxidans in einer Menge von 0,1 bis 0,6 Gew.-% vorliegt; oder wobei mindestens ein Thioester-Antioxidans in einer Menge von 0,1 bis 2,0 Gew.-% vorliegt; oder wobei mindestens ein Phosphit- und/oder Phosphonit-Antioxidans in einer Menge von 0,05 bis 2,0 Gew.-% vorliegt; oder wobei mindestens eine Epoxidverbindung in einer solchen Menge vorliegt, dass die Epoxidgruppen in der Zusammensetzung in einer Menge von 0,01 bis 2,0 Gew.-% vorliegen; oder wobei das Arylamin-Antioxidans in einer Menge von 0,4 bis 1,6 Gew.-% vorliegt, bezogen auf das Gesamtgewicht der Copolyetheresterharzzusammensetzung.

11. Copolyetheresterharzzusammensetzung nach einem der vorstehenden Ansprüche, umfassend:
(A) mindestens einen Copolyetherester;
(B) phenolische Antioxidantien, bestehend aus einem 1:1-Gemisch aus N,N'-Propan-1,3-diylbis [3-(3,5-di-tert-butyl-4-hydroxyphenyl)propionamid] und N,N'-Hexan-1,6-diylbis [3-(3,5-dibutyl-4-hydroxyphenyl)propionamid];
(C) Thioester-Antioxidans Dilaurylthiodipropionat;
(D) Phosphit-Antioxidans, ausgewählt aus Bis(2,4-di-tert-butylphenyl)pentaerythritdiphosphit, Bis(2,4-dicumylphenyl)pentaerythritdiphosphit und Gemischen davon; und
(E) Epoxidverbindung ausgewählt aus Poly(bisphenol-A-co-Epichlorhydrin) mit Glycidyl-Endgruppen, Poly(bisphenol-F-co-Epichlorhydrin) mit Glycidyl-Endgruppen, Tetraglycidylethern von Tetraphenolethan, Polypropylenglykol-Diglycidylether und Gemischen aus zwei oder mehr davon; oder ein Reaktionsprodukt der Epoxidverbindung.

12. Copolyetheresterharzzusammensetzung nach einem der Ansprüche 1 bis 10, umfassend:
(A) mindestens einen Copolyetherester;
(B) phenolische Antioxidantien, ausgewählt aus N,N'-Propan-1,3-diylbis [3- (3,5-Di-tert-butyl-4-hydroxyphenyl)propionamid], N,N'-Hexan-1,6-diylbis [3-(3,5-di-butyl-4-hydroxyphenyl)propionamid] und Gemischen davon;
(C) Thioester-Antioxidans Dilaurylthiodipropionat;
(D) Phosphit-Antioxidans Bis(2,4-di-*tert*-butylphenyl)pentaerythritoldiphosphit; und
(E) Epoxidverbindung Epoxidverbindung Poly(bisphenol-A-co-Epichlorhydrin) mit Glycidyl-Endgruppen; oder ein Reaktionsprodukt der Epoxidverbindung.

13. Copolyetheresterharzzusammensetzung nach einem der vorstehenden Ansprüche, deren Zeit bis zum Erreichen einer Dehnung von 50 % bei Bruch, gemessen gemäß ISO 527-2 unter Verwendung von Prüfkörpern gemäß ISO527-2/5a, mindestens 720 Stunden beträgt.

14. Teil, hergestellt aus der Copolyetheresterharzzusammensetzung nach einem der vorstehenden Ansprüche.

15. Teil nach Anspruch 14, bei dem es sich um eine Fluidleitung handelt, vorzugsweise um eine Fluidleitung für Kraftfahrzeuge oder eine Gasleitung für Kraftfahrzeuge.

## Revendications

1. Composition de résine de copolyétherester, comprenant :
(A) au moins un copolyétherester ;
(B) au moins un antioxydant phénolique ;
(C) au moins un antioxydant thioester ;
(D) au moins un phosphite et/ou un antioxydant phosphonite ; et
(E) au moins un composé époxy, ou un produit de réaction du au moins un composé époxy,
dans lequel le au moins un antioxydant thioester est choisi parmi le thiodipropionate de dilauryle, le thiodiéthylène bis[3-[3,5-di-tert-butyl-4-hydroxyphenyl]-propionate], l'acide 3,3'-thiodipropionique de dioctadécylester, le 4,4'-thiobis(2-tert-butyl-5-méthylphénol)bis(3-(dodécylthio)propionate), le néopentanététrayl 3-(dodécylthio)propionate, le di(tridécyl)thiodipropionate, et des mélanges de deux ou plus de ceux-ci, et
dans lequel l'antioxydant phosphite est choisi parmi les diphosphites, les phosphites d'aryle encombrés stériquement, les phosphites de stabilisants aminés encombrés, les diphosphites de pentaérythritol, et des mélanges de deux ou plus de ceux-ci.

2. Composition de résine de copolyétherester selon la revendication 1, dans laquelle le au moins un copolyétherester est choisi parmi des copolyétheresters préparés à partir de monomères comprenant (1) du poly(oxyde de tétraméthylène) glycol ou du poly(oxyde de triméthylène) glycol, du poly(oxyde de propylène) glycol et des mélanges de deux ou plus de ceux-ci ; (2) un acide dicarboxylique choisi dans le groupe comprenant l'acide isophtalique, l'acide téréphtalique et des mélanges de ceux-ci ; et (3) un diol choisi dans le groupe comprenant le 1,4-butanediol, le 1,3-propanediol et des mélanges de ceux-ci ; ou dans laquelle le au moins un copolyétherester est choisi parmi descopolyétheresters préparés à partir de monomères comprenant (1) du poly(oxyde de tétraméthylène) glycol ; (2) de l'acide téréphtalique ; et (3) un diol choisi dans le groupe comprenant le 1,4-butanediol, le 1,3-propanediol et des mélanges de ceux-ci.

3. Composition de résine copolyétherester selon la revendication 1 ou 2, dans laquelle le au moins un antioxydant phénolique est choisi parmi le 1,3,5-tris(3,5-di-tert-butyl-4-hydroxybenzyl)-s-triazine-2,4,6(1H,3H,5H)-trione (AO-20), le 1,1,3-tris(2-méthyl-4-hydroxy-5-tert-butylphényl)butane (AO-30), le 4,4'-butylidène-bis(6-tert-butyl-m-crésol) (AO-40), le 3-(3,5-di-tert-butyl-4-hydroxyphényl)propionate d'octadécyle (AO-50), l'acide benzènepropanoïque, le 3-(1,1-diméthyléthyl)-4-hydroxy-5-méthyl- (AO-80), le 1,3,5-triméthyl-2,4,6-tris(3,5-di-tert-butyl-4-hydroxybenzyl)benzène (AO-330), le tétrakis(3-(3,5-di-tert-butyl-4-hydroxyphényl)propionate de pentaérythritol (EVERNOX-10), le 3-(3,5-di-tert-butyl-4-hydroxyphényl)propionate d'octadécyle (EVERNOX-76), l'octyl-3,5-di-tert-butyl-4-hydroxyhydrocinnamate (EVERNOX-1135), la 1,2-bis(3,5-di-tert-butyl-4-hydroxyhydrocinnamoyl)hydrazine (EVERNOX MD-1024), le 3,3'-bis(3,5-di-tert-butyl-4-hydroxyphényl)-N,N'-hexaméthylènedipropionamide (EVERNOX-1098), le N,N'-propane-1,3-diylbis [3-(3,5-di-tert-butyl-4-hydroxyphenyl) propionamide], et des mélanges de deux ou plus de ceux-ci ; et de préférence dans laquelle leau moins un antioxydant phénolique est choisi parmi le N,N'-propane-1,3-diylbis(IV). [3-(3,5-di-tert-butyl- 4-hydroxyphényle) propionamide], le N,N'-Hexane-1,6-diylbis [3-(3,5-di- butyl-4-hydroxyphényl) propionamide], et des mélanges de ceux-ci.

4. Composition de résine de copolyétherester selon l'une quelconque des revendications précédentes, dans laquelle le au moins un antioxydant phénolique est un mélange 1:1 de N,N'-propane-1,3-diylbis [3-(3,5-di-tert-butyl-4-hydroxyphenyl) propionamide] et N,N'-hexane-1,6-diylbis [3-(3,5-di-butyl-4-hydroxyphenyl) propionamide].

5. Composition de résine de copolyétherester selon l'une quelconque des revendications précédentes, dans laquelle le au moins un antioxydant thioester est choisi parmi le thiodipropionate de dilauryle, le thiodiéthylène bis[3-[3,5-di-tert-butyl-4-hydroxyphenyl]propionate], et des mélanges de ceux-ci, de préférence dans laquelle le au moins un antioxydant thioester est le thiodipropionate de dilauryle.

6. Composition de résine de copolyétherester selon l'une quelconque des revendications précédentes, dans laquelle le au moins un phosphite et/ou antioxydant phosphonite est sélectionné parmi le tris(2,4-di-*tert*-butylphényl)phosphite, la 1,3,7,9-tétratert-butyl-11-(2-ethylhexoxy)-5h-benzo[d][1,3,2]benzodioxaphosphocine, le diphosphite de bis(2,4-dicumylphényl)pentaérythritol, le phosphite de tris(nonylphényle), le phosphite d'isodécyldiphényle, le phosphite d'alcool 4,4'-isopropylidènediphénol C₁₂₋₁₅, le phosphite de 2-éthylhexyldiphényle, le phosphite de triphényle, le phosphite de diisodécylphényle, le diphosphite de bis(2,6-di-ter-butyl-4-méthylphényl)pentaérythritol (ADK STAB PEP-36), le diphosphite de bis(2,4-di-ter-butylphényl)pentaérythritol (Ultranox 626), le 2,2'2"-nitrilo[triethyl-tris[3,3',5,5'-tetra-tert-butyl-1,1 '-biphenyl-2,2'-diyl]] phosphite, le tetrakis(2,4-di-tert-butylphenyl)[1,1-biphenyl]-4,4'diylbisphosphonite, et des mélanges de deux ou plus de ceux-ci ; et de préférence dans laquelle au moins un phosphite et/ou antioxydant phosphonite est sélectionné parmi le diphosphite de bis(2,4-di-ferf-butylphényl)pentaérythritol , le diphosphite de bis(2,6-di-ter-butyl-4-méthylphényl)pentaérythritol, le diphosphite de bis(2,4-dicumylphényl)pentaérythritol, le tetrakis(2,4-di-tert-butylphenyl)[1,1-biphenyl]-4,4'diylbisphosphonite et des mélanges de deux ou plus de ceux-ci.

7. Composition de résine de copolyétherester selon l'une quelconque des revendications précédentes, dans laquelle au moins un composé époxy est choisi parmi ceux présentant deux groupes époxy ou plus par molécule, et des mélanges de deux ou plus de ceux-ci.

8. Composition de résine de copolyétherester selon l'une quelconque des revendications précédentes, dans laquelle ledit au moins un composé époxy est choisi parmi le poly(bisphénol A-co-épichlorhydrine) à extrémités glycidyle, le poly(bisphénol F-co-épichlorhydrine) à extrémités glycidyle, les tétraglycidyl éthers de tétraphénoléthane, les copolymères d'éther diglycidylique de poly(propylèneglycol) d'éthylène/acrylate de n-butyle/méthacrylate de glycidyle, les copolymères d'éthylène/acrylate de n-méthyle/méthacrylate de glycidyle, l'éther diglycidylique de résorcinol, et les mélanges de deux ou plus de deux-ci ; et, de préférence, dans laquelle le au moins un composé époxy est le poly(bisphénol A-co-épichlorhydrine) à extrémités glycidyle.

9. Composition de résine de copolyétherester selon l'une quelconque des revendications précédentes, qui comprend en outre au moins un antioxydant arylamine, et de préférence dans laquelle l'antioxydant arylamine est la 4,4'-bis(alpha, alpha-diméthylbenzyl)diphénylamine.

10. Composition de résine de copolyétherester selon l'une quelconque des revendications précédentes, dans laquelle le copolyétherester est présent en une quantité de 50 à 98 % en poids ; ou dans laquelle le au moins un antioxydant phénolique est présent en une quantité de 0,1 à 0,6 % en poids ; ou dans laquelle le au moins un antioxydant thioester est présent en une quantité de 0,1 à 2,0 % en poids ; ou dans laquelle le au moins un phosphite et/ou antioxydant phosphonite est présent en une quantité de 0,05 à 2,0 % en poids ; ou dans laquelle le au moins un composé époxy est présent en une quantité telle que les groupes époxyde sont présents dans la composition en une quantité de 0,01 à 2,0 % en poids ; ou dans laquelle l'antioxydant arylamine est présent en une quantité de 0,4 à 1,6 % en poids, sur la base du poids total de la composition de résine de copolyétherester.

11. Composition de résine de copolyétherester selon l'une quelconque des revendications précédentes, comprenant :
(A) au moins un copolyétherester ;
(B) des antioxydants phénoliques étant un mélange 1:1 de N,N'-propane-1,3-diylbis [3-(3,5-di-tert-butyl-4-hydroxyphenyl)propionamide], N,N'-Hexane-1,6-diylbis [3-(3,5-di-butyl-4-hydroxyphenyl) propionamide] ;
(C) un antioxydant thioester de thiodipropionate de dilauryle ;
(D) un antioxydant phosphite sélectionné parmi le diphosphite de bis(2,4-di-tert-butylphényl)pentaérythritol, le diphosphite de bis(2,4-dicumylphényl)pentaérythritol et des mélanges de ceux-ci ; et
(E) un composé époxy choisi parmi le poly(bisphénol A-co-épichlorhydrine) à extrémités glycidyle, le poly(bisphénol F-co-épichlorhydrine) à extrémités glycidyle, les éthers tétraglycidyliques de tétraphénoléthane, l'éther diglycidylique de poly(propylèneglycol), et des mélanges de deux ou plus de ceux-ci ; ou un produit de réaction du composé époxy.

12. Composition de résine de copolyétherester selon l'une quelconque des revendications 1 à 10, comprenant :
(A) au moins un copolyétherester ;
(B) des antioxydants phénoliques choisis parmi N,N'-propane-1,3-diylbis [3-(3,5-di-tert-butyl-4-hydroxyphényl)propionamide], N,N'-Hexane-1,6-diylbis [3-(3,5-di-butyl-4-hydroxyphenyl)propionamide], et des mélanges de ceux-ci ;
(C) un antioxydant thioester de thiodipropionate de dilauryle ;
(D) un antioxydant phosphite de diphosphite de bis(2,4-di-*tert*-butylphényl)pentaérythritol ; et
(E) un composé époxy de poly(bisphénol A-co-épichlorhydrine) à extrémités glycidyle ; ou un produit de réaction du composé époxy.

13. Composition de résine de copolyétherester selon l'une quelconque des revendications précédentes, présentant un temps de rétention de 50 % de déformation à la rupture mesuré selon la norme ISO 527-2 à l'aide de pièces de test conformes à ISO527-2/5a d'au moins 720 heures.

14. Pièce fabriquée à partir de la composition de résine de copolyétherester selon l'une quelconque des revendications précédentes.

15. Pièce selon la revendication 14, qui est un conduit de fluide, de préférence un conduit de fluide automobile ou un conduit de gaz automobile.
